# EUROPEAN PATENT APPLICATION

(11) **EP 4 699 941 A1**
(43) Date of publication of application: **25.02.2026**
(21) Application number: 24934521.6
(22) Date of filing: 12.04.2024
(51) Int. Cl.: B65B 13/18, B65B 13/22

(54) **INTELLIGENT SAFETY-CONTROL STRAP WINDING AND TIGHTENING DEVICE**

(30) Priority: 10.04.2024 CN 202420730672 U
(71) Applicant: Taizhou Runjie Logistics Safety Equipment Science and Technology Co., Ltd., Taizhou, Jiangsu 225300 (CN)
(72) Inventor: ZHOU, Jing, Taizhou, Jiangsu 225300 (CN); LI, Chunzhi, Taizhou, Jiangsu 225300 (CN); YANG, Xianwei, Taizhou, Jiangsu 225300 (CN); MA, Fengquan, Taizhou, Jiangsu 225300 (CN)
(74) Representative: Dai, Simin
(86) International application number: PCT/CN2024/087416
(87) International publication number: WO 2025/213441

(57) **Abstract**

A tensioning device with intelligent safety control for a webbing is provided, including a handle assembly (1), a base assembly (2), and a long webbing (3). The handle assembly (1) includes a handle (4) and ratchet wheels (5), the base assembly (2) includes a base (6), the handle (4) and the base (6) are pivotally connected with each other through a reeling shaft (7), the ratchet wheels (5) are fixedly mounted on the reeling shaft (7), a reel (8) is fixed between the ratchet wheels (5), the ratchet wheels (5), the reel (8), and the reeling shaft (7) rotate synchronously, the reel (8) is sleeved outside the reeling shaft (7) and disposed coaxially, one side of the reel (8) is provided with an opening for the long webbing (3) to pass through, one end of the long webbing (3) is sleeved on the reeling shaft (7), and the other end of the long webbing (3) is led out from one end of the base (6), one end of the reeling shaft (7) is connected to a coiling spring assembly (9); the coiling spring assembly (9) includes a coiling spring (91), a coiling spring cartridge (92), and a coiling cartridge cover (93), the coiling cartridge cover (93) is disposed on the coiling spring cartridge (92), and a brake assembly (10) is disposed in the coiling spring cartridge (92); one end of the reeling shaft (7) is provided with a C-shaped opening (71), an eccentric shaft (72), or a concentric screw hole (40), depending on the structure of the brake assembly (10), thereby preventing the long webbing (3) from whipping and injuring operators, ensuring personal safety.

## Description

### TECHNICAL FIELD

The present disclosure relates to the technical field of tighteners, and specifically relates to a tensioning device with intelligent safety control for a webbing.

### BACKGROUND

Tighteners are securing devices used during cargo transportation, relocation, loading, or warehousing, featuring a reliable locking mechanism that prevents accidental release while offering safe, lightweight, and user-friendly operation to protect goods from damage.

A standard tensioner typically consists of a handle assembly, a base assembly, ratchet wheels, and long/short webbings. During cargo securing, the long/short webbings are fixed to designated positions or interconnected, then the handle assembly is pulled reciprocally to engage the ratchet wheels via a movable pawl, which rotates the coiling spring shaft to wind the webbing until maximum tension is achieved. To release cargo, the handle is rotated to a specific angle to disengage both the movable pawl and the ratchet wheels, and the stopping pawl on the base assembly is pushed up by the handle side plate of the handle assembly and engaged from the ratchet wheels, at which time it is possible to pull out the long webbing to achieve the purpose of unlocking the goods.

Some tensioners have the function of automatic rewinding of the long webbing. For such power-driven tensioning devices, when automatically retracting the long webbing, it is necessary to carefully control the retraction speed to prevent the long webbing from swinging and potentially injuring the operator. Therefore, an appropriate braking mechanism must be provided.

### SUMMARY

In view of the foregoing, it is desired to provide a tensioning device with intelligent safety control for a webbing, which can be manually controlled for safe rewinding of webbing, and can also automatically rewind a long webbing, and is provided with a braking mechanism, at the same time, it can control the speed of rewinding of the long webbing.

In accordance with the above objective, the technical solution of the present disclosure is described as follows.

One or more embodiments of the present disclosure provide a tensioning device with intelligent safety control for a webbing, comprising a handle assembly, a base assembly, and a long webbing, wherein the handle assembly includes a handle and ratchet wheels, the base assembly includes a base, the handle and the base are pivotally connected with each other through a reeling shaft, the ratchet wheels are fixedly mounted on the reeling shaft, a reel is fixed between the ratchet wheels, the ratchet wheels, the reel, and the reeling shaft rotate synchronously, the reel is sleeved outside the reeling shaft and disposed coaxially, one side of the reel is provided with an opening for the long webbing to pass through, one end of the long webbing is sleeved on the reeling shaft, and the other end of the long webbing is led out from one end of the base through the opening on the reel, one end of the reeling shaft is connected to a coiling spring assembly, the coiling spring assembly includes a coiling spring and a coiling spring cartridge sleeved on the coiling spring, the base includes a base side plate and a base bottom plate, and an upper side curved surface of the base side plate is divided into a release zone and a tensioning working zone in turn. The coiling spring assembly further includes a coiling cartridge cover, the coiling cartridge cover is disposed on the coiling spring cartridge, and a brake assembly is disposed in the coiling spring cartridge; the brake assembly includes a limit tooth and a pendulum tooth, the limit tooth is connected to the coiling spring cartridge, a plurality of internal teeth are disposed on a ring-shaped inner wall of the limit tooth that is close to the reeling shaft, a hole is in a center of the pendulum tooth, a linkage groove and a brake groove are disposed in the hole, a diagonal over-section is disposed between the linkage groove and the brake groove, the pendulum tooth is eccentrically sleeved on an C-shaped opening at the end of the reeling shaft, an outer contour tooth is disposed on an outer side of the pendulum tooth away from the brake groove, and the pendulum tooth rotates synchronously with the reeling shaft.

In some embodiments, the upper side curved surface of the base side plate is provided with a first protrusion, the first protrusion dividing the upper side curved surface of the base side plate into the release zone and the tensioning working zone; the base side plate and the base bottom plate are of one-piece construction, the base side plate being perpendicular to the base bottom plate and symmetrically disposed on both sides of the base bottom plate.

In some embodiments, a first pawl sliding groove is disposed at a rear side of the base side plate, a first limiting plate is disposed at a rear side of the base bottom plate, the first pawl sliding groove is provided with a first pawl, the first pawl is T-shaped, both ends of the first pawl are slidably disposed at the first pawl sliding groove, a first reset spring is sleeved on a lower end of the first pawl, which is inserted into the first limiting plate and slidably matched with the first limiting plate; and the first pawl elastically slides in a direction of the first pawl sliding groove under an action of the first reset spring, and the first pawl is correspondingly cooperated with the ratchet wheels.

In some embodiments, the handle includes a handgrip and handle side plates, the handle side plates are connected to the handgrip and symmetrically disposed on both sides of the handgrip, the handle side plates are coaxially rotationally connected to the base side plate through a sleeve, the sleeve is connected with the reeling shaft so that the handle side plates are freely rotatable with the reeling shaft as a central axis, the handle side plates are provided with symmetrical second pawl slide grooves, the second pawl slide grooves are provided with a second pawl, the second pawl is L-shaped, a plastic sleeve is disposed at an upper end of the second pawl, and two ends of the second pawl are slidably disposed at the second pawl slide grooves, the second pawl is connected to one side of one of the handle side plates by a torsion spring; and the second pawl elastically slides in a direction of each of the second pawl slide grooves under an action of the torsion spring, and the second pawl is correspondingly cooperated with the ratchet wheels.

In some embodiments, the two ends of the second pawl extend out of the second pawl slide grooves and fit in the upper side curved surface of the base side plate under the action of the torsion spring.

In some embodiments, a first squeezing surface and a second squeezing surface for squeezing a first pawl are disposed on a lower side curved surface of the handle side plate.

In some embodiments, the upper side curved surface of the base side plate is further divided into an unloading section, a tightening section, and a releasing section in turn, a first locking port being disposed between the unloading section and the tightening section, and a second locking port being disposed at an end of the releasing section.

In some embodiments, a front cover is disposed on one end of the base close to the long webbing, the front cover is provided with a webbing channel for the long webbing to pass through and provided with symmetrical limit walls, and a bottom of the base is provided with symmetrical limit ports that are strip-shaped, the limit walls and the limit ports cooperating for limiting the handle and avoiding interference between sides of the handle and the ratchet wheels.

In some embodiments, the long webbing is connected with a hook, the front cover is disposed at one end of the base, the webbing channel on the front cover extends toward the other end of the base, and the webbing channel is in a constricted shape and is configured to catch one end of the hook.

In some embodiments, a safety mechanism is disposed at an opening of the hook, the safety mechanism includes a return-action spring and a safety sleeve, the return-action spring is mounted on the hook, the safety sleeve is disposed on the return-action spring and elastically closes the opening of the hook under an action of the return-action spring.

In some embodiments, a detachable connecting shaft is disposed on an end of the base opposite to the long webbing, and the detachable connecting shaft is connected with at least one of a short webbing, a hooklet, a snap, or a fixed plate.

In some embodiments, an eccentric shaft is disposed at one end of the reeling shaft, and the brake assembly includes a locking pawl, a spring, and a fixing member, the fixing member is connected to the reeling shaft, the fixing member rotates synchronously with the reeling shaft, an outer contour tooth is disposed on an outer periphery of the locking pawl close to the coiling spring cartridge, the locking pawl is connected to the eccentric shaft at the end of the reeling shaft, the spring is disposed between the locking pawl and the fixing member, one end of the spring is connected to the fixing member, and the other end of the spring is connected to the locking pawl to provide a force for the locking pawl to close toward the reeling shaft; and a plurality of internal teeth, which are consecutive and circumferentially arranged, are disposed on a ring-shaped inner wall of the coiling spring cartridge facing the locking pawl.

In some embodiments, an end of the reeling shaft is provided with a concentric screw hole, and the brake assembly includes a brake pawl, a return spring, a limiting disk, and a screw, the limiting disk is fixed at the end of the reeling shaft by matching the screw with the concentric screw hole, the limiting disk rotates synchronously with the reeling shaft, an outer contour tooth is disposed on an outer periphery of the brake pawl close to the coiling spring cartridge, the brake pawl is connected to the limiting disk, the return spring is disposed between the brake pawl and the limiting disk, one end of the return spring is connected to the limiting disk, and the other end of the return spring is connected to the brake pawl to provide a force for the brake pawl to close toward the reeling shaft; and a plurality of internal teeth, which are consecutive and circumferentially arranged, are disposed on a ring-shaped inner wall of the coiling spring cartridge facing the brake pawl.

In some embodiments, an eccentric shaft is disposed on one end of the reeling shaft, and the brake assembly includes a brake disk and a compression spring, the brake disk is provided with a recess, an outer contour flange is disposed on an outer periphery of the brake disk that is close to the coiling spring cartridge, the brake disk is connected to the eccentric shaft of the reeling shaft, the compression spring is mounted in the recess, one end of the compression spring abuts against the brake disk, the other end of the compression spring abuts against the eccentric shaft of the reeling shaft, and the brake disk rotates synchronously with the reeling shaft.

The present disclosure has advantageous effects as follows.
(1) The present disclosure is reasonably designed and incorporates a brake assembly. When the winding speed is too fast, the long webbing can be prevented from swinging and hurting the operator. This effectively protects the personal safety of the operator.
(2) The base of the present disclosure has a simple structure. By positioning the handle on the upper side curved surface of the base side plate, the rapid winding of the long webbing can be manually controlled, while also facilitating manufacturing and reducing production costs.
(3) The present disclosure adopts a front cover equipped with limit walls, which can restrict the movement of the handle. The interference between the side surface of the handle and the side surfaces of the ratchet wheels and the base can be effectively avoided. With such a configuration, the smoothness of the tensioning device during operation is improved, making it easier and more effort-saving to use; and it can reduce the deformation of the handle caused by use, reduce friction, and increase the service life of the tensioning device.
(4) The present disclosure, by providing the safety mechanism at the opening of the hook, the hook can be prevented from accidentally detaching in a fixed state, and the safety of use can be increased.

### BRIEF DESCRIPTION OF THE DRAWINGS

FIG. 1 is an exploded schematic diagram according to Embodiment 1 of the present disclosure;
FIG. 2 is a schematic diagram of an exemplary combined state according to some embodiments of the present disclosure;
FIG. 3 is a schematic diagram of an exemplary first type of base structure according to some embodiments of the present disclosure;
FIG. 4 is a schematic diagram of an exemplary second type of base structure according to some embodiments of the present disclosure;
FIG. 5 is a schematic diagram of a structure of an exemplary handle assembly according to some embodiments of the present disclosure;
FIG. 6 is a schematic diagram of a working principle of an exemplary locking position in a release zone of a first type of base structure according to some embodiments of the present disclosure;
FIG. 7 is a detailed enlargement schematic diagram of part A in FIG. 6;
FIG. 8 is a schematic diagram of a working principle of an exemplary release zone of a first type of base structure according to some embodiments of the present disclosure;
FIG. 9 is a schematic diagram of a top view according to some embodiments of the present disclosure;
FIG. 10 is a schematic diagram of a cross-section view according to some embodiments of the present disclosure;
FIG. 11 is a schematic diagram of an exemplary front cover according to some embodiments of the present disclosure;
FIG. 12 is a schematic diagram of an exemplary reeling shaft according to Embodiment 1 of the present disclosure;
FIG. 13 is an internal schematic diagram of an exemplary brake assembly (in an unwinding state) according to Embodiment 1 of the present disclosure;
FIG. 14 is an internal schematic diagram of an exemplary brake assembly (in a locked state) according to Embodiment 1 of the present disclosure;
FIG. 15 is an internal schematic diagram of an exemplary brake assembly (in a winding state) according to Embodiment 1 of the present disclosure;
FIG. 16 is a schematic diagram of a structure of a base according to Embodiment 2 of the present disclosure;
FIG. 17 is an exploded schematic diagram according to Embodiment 3 of the present disclosure;
FIG. 18 is an exploded schematic diagram according to Embodiment 4 of the present disclosure;
FIG. 19 is a schematic diagram of an exemplary reeling shaft according to Embodiment 4 of the present disclosure;
FIG. 20 is a schematic diagram of an exemplary brake assembly according to Embodiment 4 of the present disclosure;
FIG. 21 is an internal schematic diagram of an exemplary brake assembly (in an unwinding state) according to Embodiment 4 of the present disclosure;
FIG. 22 is an internal schematic diagram of an exemplary brake assembly (in a locked state) according to Embodiment 4 of the present disclosure;
FIG. 23 is an internal schematic diagram of an exemplary brake assembly (in a winding state) according to Embodiment 4 of the present disclosure;
FIG. 24 is an exploded schematic diagram according to Embodiment 5 of the present disclosure;
FIG. 25 is a schematic diagram of an exemplary reeling shaft according to Embodiment 5 of the present disclosure;
FIG. 26 is a schematic diagram of an exemplary brake assembly according to Embodiment 5 of the present disclosure;
FIG. 27 is an internal schematic diagram of an exemplary brake assembly (in an unwinding state) according to Embodiment 5 of the present disclosure;
FIG. 28 is an internal schematic diagram of an exemplary brake assembly (in a locked state) according to Embodiment 5 of the present disclosure;
FIG. 29 is an internal schematic diagram of an exemplary brake assembly (in a winding state) according to Embodiment 5 of the present disclosure;
FIG. 30 is an exploded schematic diagram according to Embodiment 6 of the present disclosure;
FIG. 31 is a schematic diagram of an exemplary reeling shaft according to Embodiment 6 of the present disclosure;
FIG. 32 is a schematic diagram of an exemplary brake assembly according to Embodiment 6 of the present disclosure;
FIG. 33 is a schematic diagram of an assembly cross-sectional view of an exemplary brake assembly according to Embodiment 6 of the present disclosure;
FIG. 34 is an internal schematic diagram of an exemplary brake assembly (in an unwinding state) according to Embodiment 6 of the present disclosure;
FIG. 35 is an internal schematic diagram of an exemplary brake assembly (in a locked state) according to Embodiment 6 of the present disclosure; and
FIG. 36 is an internal schematic diagram of an exemplary brake assembly (in a winding state) according to Embodiment 6 of the present disclosure.

In the drwaings, 1, handle assembly; 2, base assembly; 3, long webbing; 4, handle; 41, handgrip; 42, handle side plate; 1143, sleeve; 43, second pawl slide groove; 44, plastic sleeve; 45, torsion spring; 46, lower side curved surface; 401, first squeezing surface; 402, second squeezing surface; 5, ratchet wheel; 6, base; 61, base side plate; 62, base bottom plate; 63, first pawl sliding chute; 64, first limiting plate; 65, first reset spring; 66, upper side curved surface; 601, unloading section; 6001, first position; 602, tightening section; 603, releasing section; 604, first locking port; 605, second locking port; 606, release zone; 607, tensioning working zone; 608, locking position; 609, first protrusion; 7, reeling shaft; 71, C-shaped opening; 72, eccentric shaft; 8, reel; 9, coiling spring assembly; 91, coiling spring; 92, coiling spring cartridge; 93, coiling cartridge cover; 10, brake assembly; 11, limit tooth; 12, pendulum tooth; 13, internal tooth; 14, linkage groove; 15, brake groove; 16, diagonal over-section; 17, outer contour tooth; 18, front cover; 19, webbing channel; 20, limit wall; 21, limit port; 22, hook; 23, safety mechanism; 24, return-action spring; 25, safety sleeve; 26, connecting shaft; 27, second pawl; 28, first pawl; 29, locking pawl; 30, spring; 31, fixing member; 32, brake pawl; 33, return spring; 34, limiting disk; 35, screw; 36, brake disk; 37, compression spring; 38, recess; 39, outer contour flange; 40, concentric screw hole.

### DETAILED DESCRIPTION

In order to make the purpose and the advantages of the present disclosure clearer and more understandable, the present disclosure is hereinafter specifically described in conjunction with embodiments. It should be understood that the following text is only for describing one or more specific embodiments of the present disclosure, and is not intended to strictly limit the scope of protection of the specific claims of the present disclosure.

### Embodiment 1

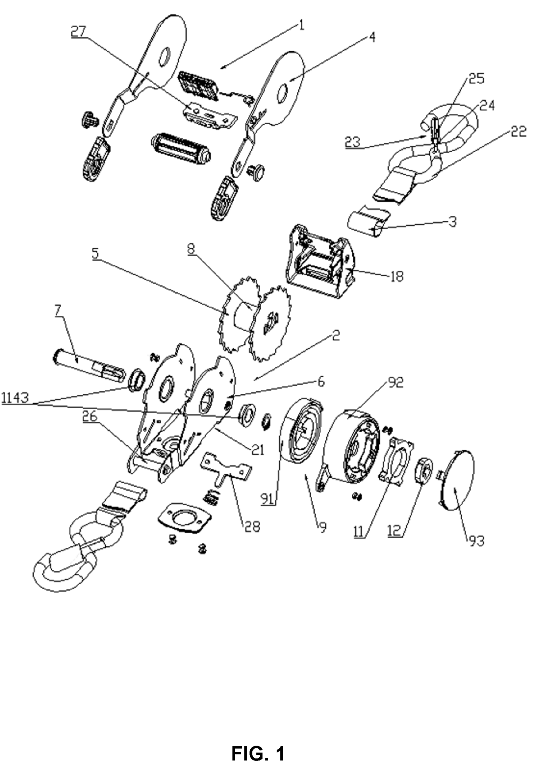

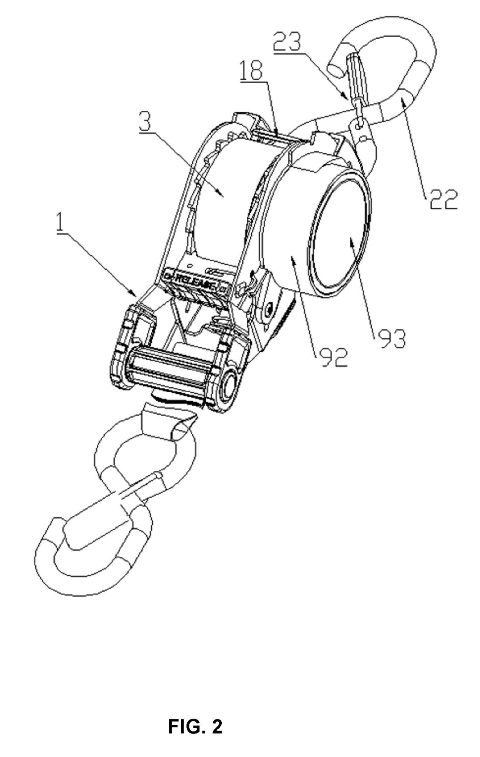

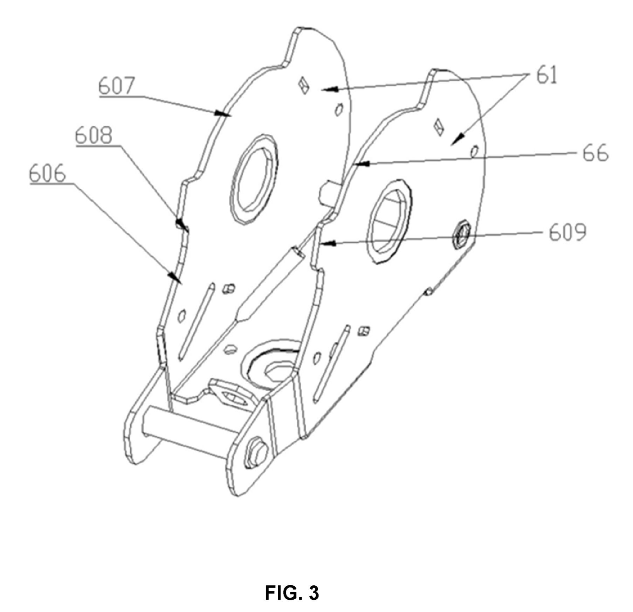

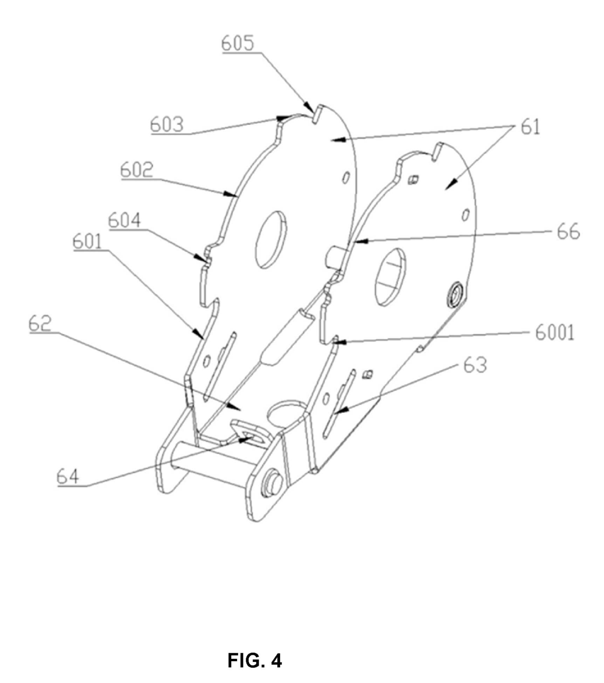

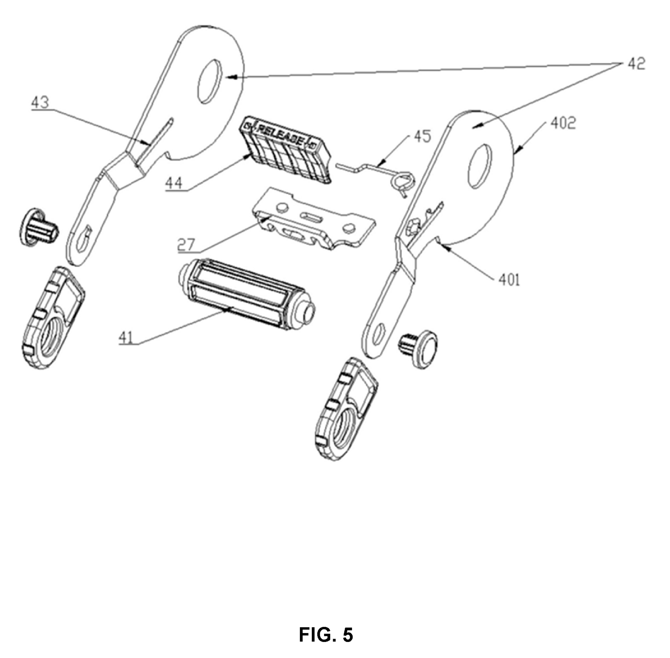

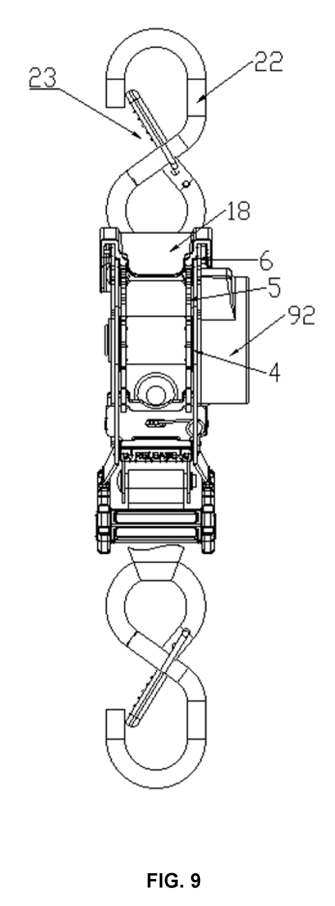

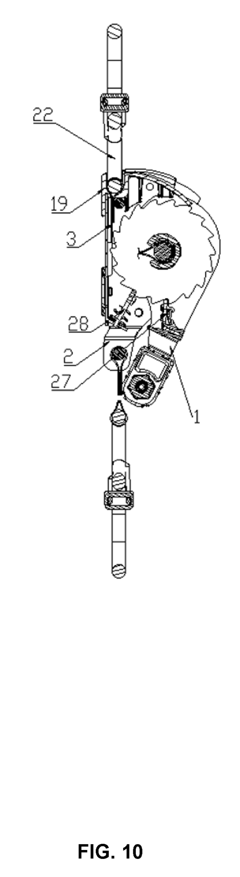

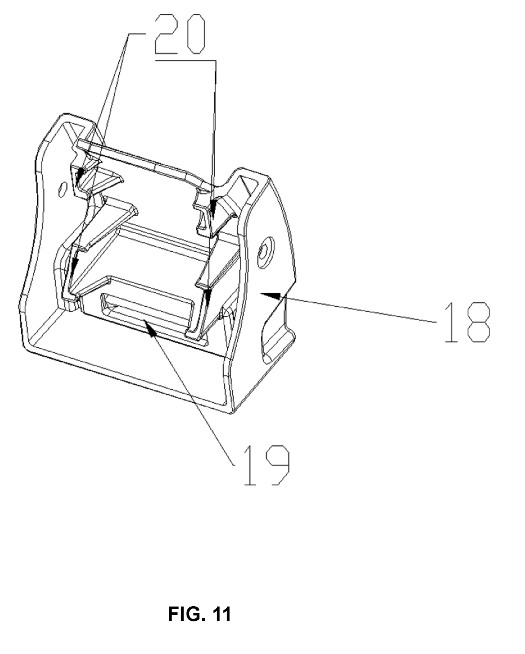

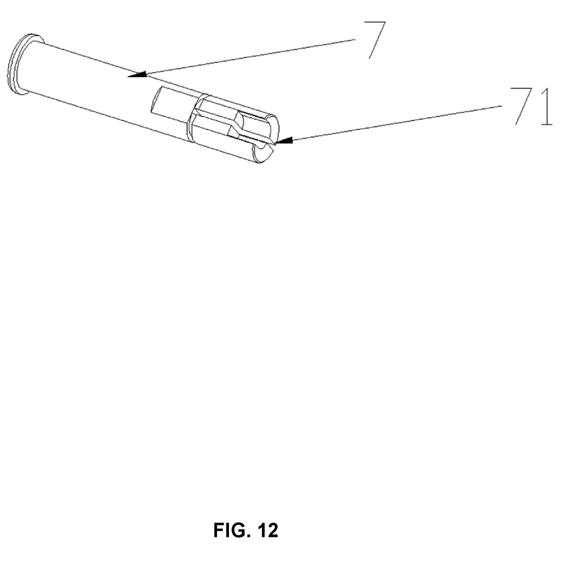

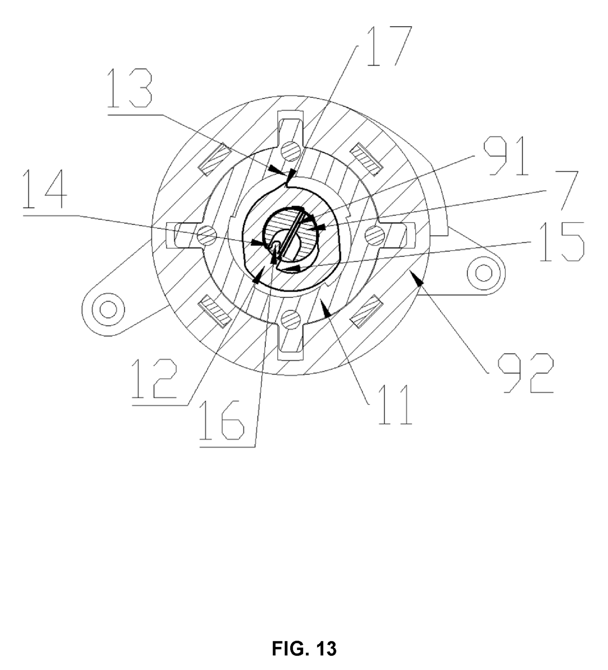

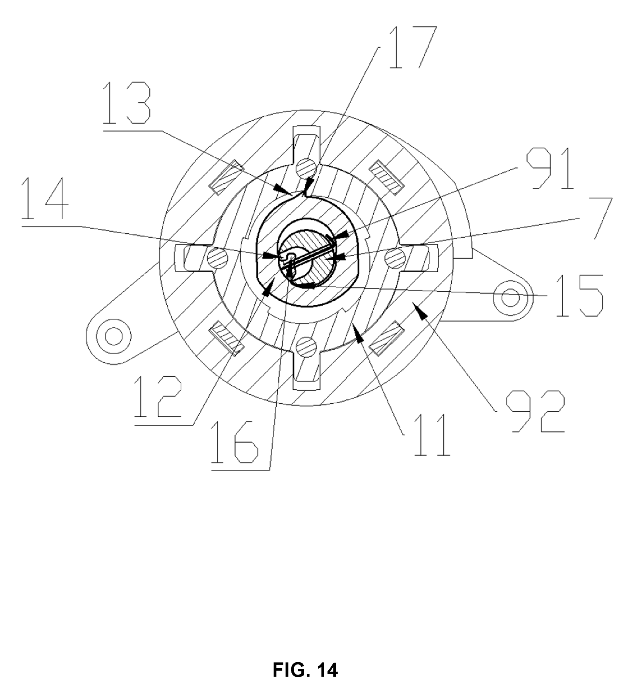

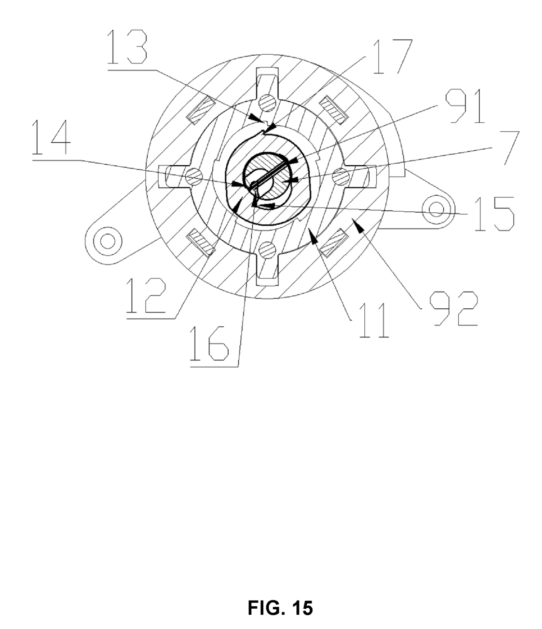

As shown in FIG. 1 to FIG. 15, some embodiments of the present disclosure provide a tensioning device with intelligent safety control for a webbing, including the handle assembly 1, the base assembly 2, and a long webbing 3, wherein the handle assembly 1 includes a handle 4 and ratchet wheels 5, the base assembly 2 includes the base 6, the handle 4 and the base 6 are pivotally connected with each other through the reeling shaft 7, the ratchet wheels 5 are fixedly mounted on the reeling shaft 7, a reel 8 is fixed between the ratchet wheels 5, the ratchet wheels 5, the reel 8, and the reeling shaft 7 rotate synchronously, the reel 8 is sleeved outside the reeling shaft 7 and disposed coaxially, one side of the reel 8 is provided with an opening for the long webbing 3 to pass through, one end of the long webbing 3 is sleeved on the reeling shaft 7, and the other end of the long webbing 3 is led out from one end of the base 6 through the opening on the reel 8, one end of the reeling shaft 7 is connected to a coiling spring assembly 9, the coiling spring assembly 9 includes a coiling spring 91 and a coiling spring cartridge 92 sleeved on the coiling spring 91. One end of the reeling shaft 7 may be provided with a C-shaped opening 71, the coiling spring assembly 9 further includes a coiling cartridge cover 93, the coiling cartridge cover 93 is disposed on the coiling spring cartridge 92, and the brake assembly 10 is disposed in the coiling spring cartridge 92.

The brake assembly 10 includes a limit tooth 11 and a pendulum tooth 12, the limit tooth 11 is connected to the coiling spring cartridge 92, a plurality of internal teeth 13 are disposed on a ring-shaped inner wall of the limit tooth 11 that is close to the reeling shaft 7, a hole is in a center of the pendulum tooth 12, a linkage groove 14 and a brake groove 15 are disposed in the hole, a diagonal over-section 16 is disposed between the linkage groove 14 and the brake groove 15, the pendulum tooth 12 is eccentrically sleeved on the C-shaped opening 71 at the end of the reeling shaft 7, an outer contour tooth 17 is disposed on an outer side of the pendulum tooth 12 away from the brake groove 15, and the pendulum tooth 12 rotates synchronously with the reeling shaft 7.

The base 6 includes a base side plate 61 and a base bottom plate 62. The base side plate 61 and the base bottom plate 62 are of one-piece construction, and the base side plate 61 is perpendicular to the base bottom plate 62 and symmetrically disposed on both sides of the base bottom plate 62. A first pawl sliding groove 63 is disposed at a rear side of the base side plate 61, a first limiting plate 64 is disposed at a rear side of the base bottom plate 62, the first pawl sliding groove 63 is provided with a first pawl 28, the first pawl 28 is T-shaped, both ends of the first pawl 28 are slidably disposed at the first pawl sliding groove 63, a first reset spring 65 is sleeved on a lower end of the first pawl 28, which is inserted into the first limiting plate 64 and slidably matched with the first limiting plate 64; and the first pawl 28 elastically slides in a direction of the first pawl sliding groove 63 under an action of the first reset spring 65, and the first pawl 28 is correspondingly cooperated with the ratchet wheels 5.

The handle 4 includes a handgrip 41 and handle side plates 42, the handle side plates 42 are connected to the handgrip 41 and symmetrically disposed on both sides of the handgrip 41, the handle side plates 42 are coaxially rotationally connected to the base side plate 61 through a sleeve 1143, the sleeve 1143 is connected with the reeling shaft 7 so that the handle side plates 42 are freely rotatable with the reeling shaft 7 as a central axis, the handle side plates 42 are provided with symmetrical second pawl slide grooves 43, the second pawl slide grooves 43 are provided with a second pawl 27, the second pawl 27 is L-shaped, a plastic sleeve 44 that facilitates operation by personnel is disposed at an upper end of the second pawl 27, and two ends of the second pawl 27 are slidably disposed at the second pawl slide grooves 43, the second pawl 27 is connected to one side of one of the handle side plates 42 by a torsion spring 45; and the second pawl 27 elastically slides in a direction of each of the second pawl slide grooves 43 under an action of the torsion spring 45, and the second pawl 27 is correspondingly cooperated with the ratchet wheels 5.

The two ends of the second pawl 27 extend out of the second pawl slide groove 43 and fit in the upper side curved surface 66 of the base side plate 61 under the action of the torsion spring 45. An upper side curved surface 66 of the base side plate 61 is provided with a first protrusion 609, the first protrusion 609 dividing the upper side curved surface 66 of the base side plate 61 into a release zone 606 and a tensioning working zone 607.

A first squeezing surface 401 and a second squeezing surface 402 for squeezing the first pawl 28 are disposed on a lower side curved surface 46 of the handle side plate 42.

A front cover 18 is disposed on one end of the base 6 close to the long webbing 3, the front cover 18 is provided with a webbing channel 19 for the long webbing 3 to pass through and provided with symmetrical limit walls 20, and a bottom of the base 6 is provided with symmetrical limit ports 21 that are strip-shaped, the limit walls 20 and the limit ports 21 cooperating for limiting the handle 4. When the handle assembly 1 is rotated, the handle side plate 42 may move under the restriction effect of the limit walls 20 and the limit ports 21, and interference between the side surface of the handle 4 and the side surfaces of the ratchet wheels 5 and the base 6 may be effectively avoided. With such a configuration, on the one hand, the smoothness of the tensioning device during operation is improved, making it easier and more effort-saving to use; on the other hand, it can reduce the deformation of the handle 4 caused by use, reduce friction, and increase the service life of the tensioning device.

The long webbing 3 is connected with a hook 22, the front cover 18 is disposed at one end of the base 6, the webbing channel 19 on the front cover 18 extends toward the other end of the base 6, and the webbing channel 19 is in a constricted shape. The webbing channel 19 is designed as a groove shape and has a certain longitudinal depth. When the long webbing 3 is completely wound up, one end of the hook 22 on the long webbing 3 may be engaged into the webbing channel 19 to play the role of fixing the hook 22, thus preventing the hook 22 from shaking and reducing safety hazards.

A safety mechanism 23 is disposed at an opening of the hook 22. The safety mechanism 23 may be configured to prevent the hook 22 from accidentally detaching in a fixed state to increase the safety of use. The safety mechanism 23 includes a return-action spring 24 and a safety sleeve 25. The return-action spring 24 is mounted on the hook 22 and has an elastic force that tends to bring it closer to the opening of the hook 22. The safety sleeve 25 is disposed on the return-action spring 24 and elastically closes the opening of the hook 22 under an action of the return-action spring 24.

A detachable connecting shaft 26 is disposed on an end of the base 6 opposite to the long webbing 3, and the detachable connecting shaft 26 is connected with at least one of a short webbing, a hooklet, a snap, or a fixed plate, as well as other fasteners that play a role in securing.

The tensioning device operates as follows.

When cargo securing is performed, by rotating the handle 4, the position of the second pawl 27 on the upper side curved surface 66 (the release zone 606, the first protrusion 609, the tensioning working zone 607) of the base side plate 61 is adjusted, thereby achieving manual locking of the webbing and the adjustment function of the tensioning device.

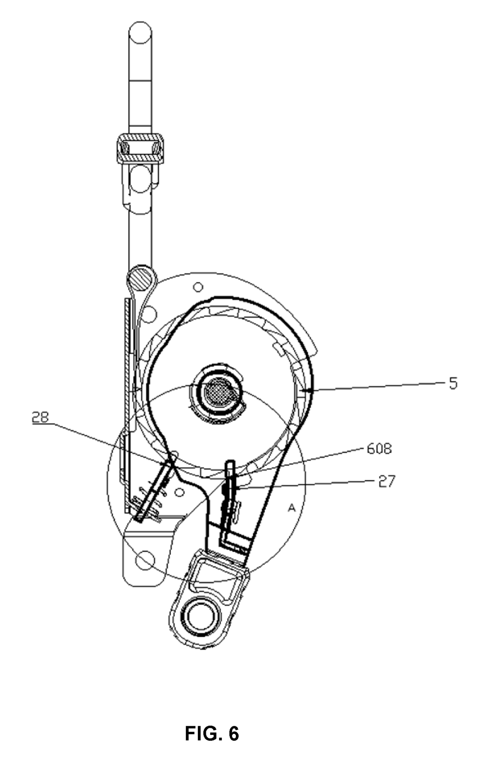

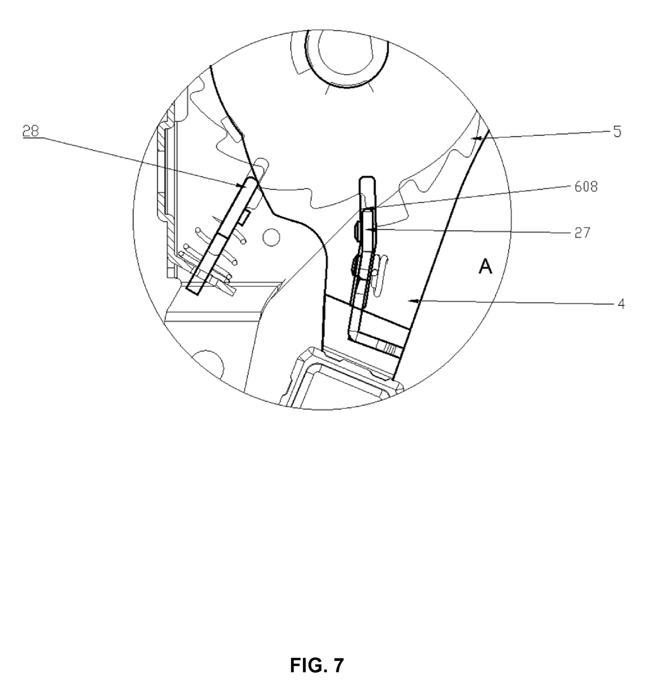

As shown in FIG. 6 and FIG. 7, when the second pawl 27 is located in a locking position 608 of the release zone 606, at this time, the end surfaces of the first pawl 28 and the second pawl 27 abut against the tips of the gear teeth of the ratchet wheels 5, and the ratchet wheel 5 are fixed, and the long webbing 3 is locked. When the force applied to the long webbing 3 is greater than the elastic force of the first reset spring 65 and the torsion spring 45, the ratchet wheels 5 may be pulled to rotate and the long webbing 3 may be pulled out.

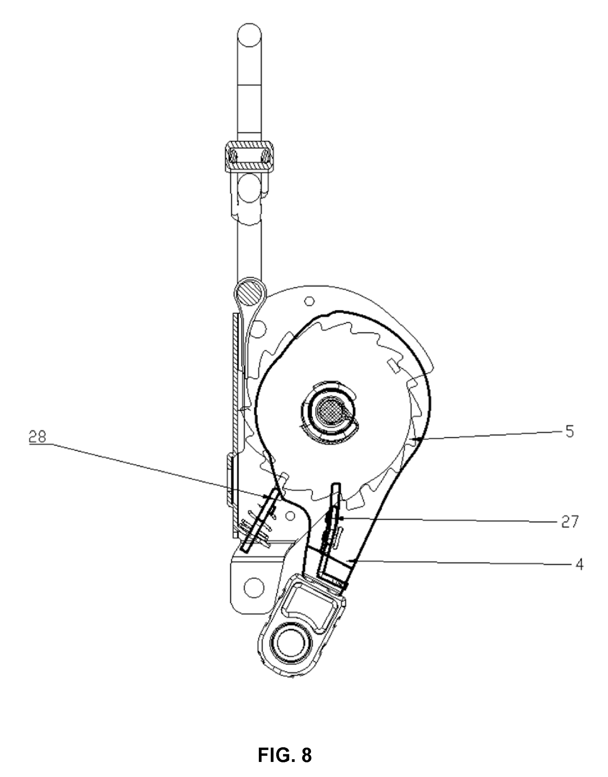

As shown in FIG. 8, when the handle 4 is rotated downward, the second pawl 27 moves downward along the release zone 606, at which time, a distance between the second pawl 27 and the axis of rotation of the ratchet wheels 5 increases, and the second pawl 27 is disengaged from the ratchet wheels 5, and, at the same time, the first squeezing surface 401 squeezes the first pawl 28, so that a distance between the first pawl 28 and the axis of rotation of the ratchet wheels 5 increases, and the first pawl 28 is disengaged from the ratchet wheels 5. In this state, the long webbing 3 may be quickly adjusted, but the handle 4 must be continuously pressed, or else, once the pressing force is released, the first pawl 28 and the second pawl 27 will be urged upward by the action of the first reset spring 65 and the torsion spring 45, respectively, forcing the handle 4 to return to its original position. As a result, the first pawl 28 and the second pawl 27 re-abut against the tips of the gear teeth of the ratchet wheels 5 to stop the long webbing 3, and in this state, the rapid retraction of the long webbing 3 may be manually controlled.

When the second pawl 27 is located in the tensioning working zone 607, both the first pawl 28 and the second pawl 27 are engaged with the ratchet wheels 5, and the second pawl 27 is not in contact with the tensioning working zone 607. By rotating the handle 4 counterclockwise, the second pawl 27 moves along the tensioning working zone 607, driving the ratchet wheels 5 to rotate, and the first pawl 28 slides along the outer edge of the ratchet wheels 5. When the handle 4 is rotated to the limit position of the tensioning working zone 607, the handle 4 may be rotated clockwise, the second pawl 27 slides along the outer edge of the ratchet wheels 5, the first pawl 28 engages with the ratchet wheels 5, and the handle 4 is reset. By repeatedly rotating the handle 4 in counterclockwise and clockwise directions, the long webbing 3 may be manually wound up, which also serves to increase the tension of the long webbing 3 and achieve a tightening effect.

After use, when it is necessary to retract the long webbing 3, the handle 4 is first rotated to move the second pawl 27 from the tensioning working zone 607 to the position of the first protrusion 609; at this point, the device is in a pre-release state. When the handle 4 is fully pressed down, the first pawl 28 and the second pawl 27 disengage from the ratchet wheels 5, and under the action of the coiling spring 91, the long webbing 3 is automatically wound up. At this time, releasing the downward force on the handle 4 will stop the webbing from moving further.

When the long webbing 3 is normally unwound, the reeling shaft 7 drives the pendulum tooth 12 to rotate, at which time the C-shaped opening 71 at the end of the reeling shaft 7 engaged into the linkage groove 14, and the outer contour tooth 17 of the pendulum tooth 12 does not contact the internal teeth 13 of the limit tooth 11, and the long webbing 3 may be continually unwound. When the long webbing 3 is wound up, the C-shaped opening 71 at the end of the reeling shaft 7 continuously abuts against the diagonal over-section 16, causing the outer contour tooth 17 of the pendulum tooth 12 away from the internal teeth 13 of the limit tooth 11, and the long webbing 3 may be continuously wound. However, when the winding speed is too fast, the pendulum tooth 12, under the action of impact rebound and inertial centrifugal force, causes the C-shaped opening 71 of the reeling shaft 7 to engage into the brake groove 15, at which time, the outer contour tooth 17 of the pendulum tooth 12 engages the internal teeth of the limit tooth 11, the brake assembly 10 is in a braking state, and the winding of the long webbing 3 is locked. Until the long webbing 3 is pulled out a certain length, the outer contour tooth 17 of the pendulum tooth 12 are disengaged from the internal teeth 13 of the limit tooth 11, and the long webbing 3 may be wound up.

### Embodiment 2

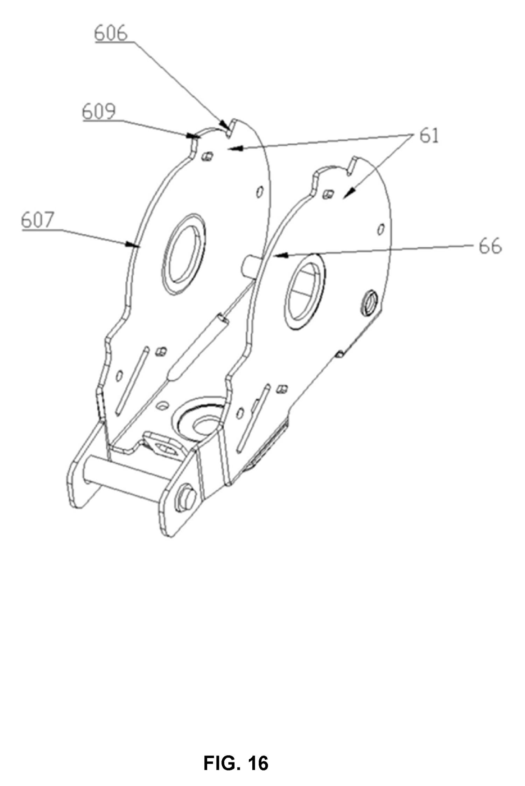

A difference between Embodiment 2 and Embodiment 1 is that, the base 6 is an alternative embodiment of the first type of the base. As shown in FIG. 16, the upper side curved surface 66 of the base side plate 61 is provided with the first protrusion 609, the first protrusion 609 dividing the upper side curved surface 66 of the base side plate 61 into the release zone 606 and the tensioning working zone 607.

When cargo securing is performed, by rotating the handle 4, the position of the second pawl 27 on the upper side curved surface 66 (the release zone 606, the first protrusion 609, the tensioning working zone 607) of the base side plate 61 is adjusted, thereby achieving manual locking of the webbing and the adjustment function of the tensioning device.

When the second pawl 27 is located in the release zone 606, the second pawl 27 is disengaged from the ratchet wheels 5, and at this time, the second squeezing surface 402 squeezes the first pawl 28 so that the first pawl 28 is disengaged from the ratchet wheels 5, and at this time, an extracting force is applied on the long webbing and the long webbing may be pulled out.

When the handle 4 is pressed downward, the second pawl 27 moves downwardly along the first protrusion 609 to reach the tensioning working zone 607, at which time the first pawl 28 and the second pawl 27 are engaged with the ratchet wheels 5, and the second pawl 27 and the tensioning working zone 607 do not in contact. Then when the handle 4 is rotated downward, the second pawl 27 moves along the tensioning working zone 607, driving the ratchet wheels 5 to rotate, and the first pawl 28 slides along the outer edge of the ratchet wheels 5. When the handle 4 is rotated to the limit position of the tensioning working zone 607, the handle 4 may be rotated in the clockwise, the second pawl 27 slides along the outer edge of the ratchet wheels 5, the first pawl 28 engages with the ratchet wheels 5, and the handle 4 is reset. By repeatedly rotating the handle 4, the long webbing 3 may be manually wound up, which also serves to increase the tension of the long webbing 3 and achieve a tightening effect.

After use, when it is necessary to retract the long webbing 3, the handle 4 is rotated to move the second pawl 27 from the tensioning working zone 607 to the position of the release zone 606, the first pawl 28 and the second pawl 27 are disengaged from the ratchet wheels 5, and, under the action of the coiling spring 91, the long webbing 3 is automatically wound up.

### Embodiment 3

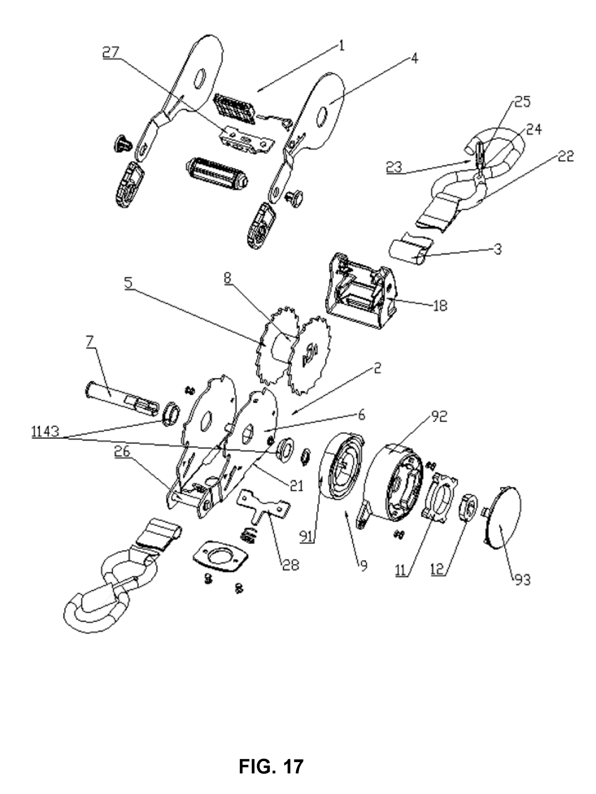

A difference between Embodiment 3and Embodiment 1 is that, the base 6 adopts a second type of base, as shown in FIG. 17, and the upper side curved surface 66 of the base side plate 61 is further divided into an unloading section 601, a tightening section 602, and a releasing section 603 in turn, a first locking port 604 being disposed between the unloading section 601 and the tightening section 602, and a second locking port 605 being disposed at an end of the releasing section 603.

When cargo securing is performed, by rotating the handle 4, the position of the second pawl 27 on the upper side curved surface 66 (the unloading section 601, the first locking port 604, the tightening section 602, the releasing section 603, and the second locking port 605) of the base side plate 61 is adjusted, thereby achieving manual locking of the long webbing 3 and the adjustment function of the tensioning device.

When the second pawl 27 is located in a first position 6001 of the unloading section 601, at this time, the end surfaces of the first pawl 28 and the second pawl 27 abut against the tips of the gear teeth of the ratchet wheels 5 to fix the ratchet wheels 5, which in turn allows the long webbing 3 to be locked. When the force applied to the long webbing 3 is greater than the elastic force of the first reset spring 65 and the torsion spring 45, the ratchet wheels 5 may be pulled to rotate and the long webbing 3 may be pulled out.

When the second pawl 27 is located in the unloading section 601, the handle 4 may be pressed down, and when the handle 4 is rotated downward, the second pawl 27 moves downward along the unloading section 601, at which time, a distance between the second pawl 27 and the axis of rotation of the ratchet wheels 5 increases, and the second pawl 27 is disengaged from the ratchet wheels 5, and at the same time, the first squeezing surface 401 squeezes the first pawl 28, so that the distance between the first pawl 28 and the axis of rotation of the ratchet wheels 5 increases, and the first pawl 28 is disengaged from the ratchet wheels 5. At this time, under the action of the coiling spring 91, the reeling shaft 7 and the ratchet wheels 5 rotate to drive the long webbing 3 to be wound up. In this state, the long webbing 3 may be quickly adjusted, but the handle 4 must be continuously pressed, or else, once the pressing force is released, the first pawl 28 and the second pawl 27 will be urged upward by the action of the first reset spring 65 and the torsion spring 45, respectively, forcing the handle 4 to return to its original position. so that the first pawl 28 and the second pawl 27 are re-abutted against the tops of the gear teeth of the ratchet wheels 5 to stop the long webbing 3, and the long webbing 3 may be manually controlled to be rapidly retracted in this state.

When the second pawl 27 is located at the first locking port 604, the second pawl 27 is engaged with the first locking port 604, at this time, the handle 4 is not rotatable, preventing accidental operation, the second pawl 27 is disengaged from the ratchet wheels 5, the first pawl 28 engages with the ratchet wheels 5, the ratchet wheels 5 are not rotatable, and the tensioning device is in a safe locked state;

When the second pawl 27 is located in the tightening section 602, both the first pawl 28 and the second pawl 27 are engaged with the ratchet wheels 5, and the second pawl 27 is not in contact with the tightening section 602 (to ensure that the second pawl 27 engages with the ratchet wheels 5 and to prevent the second pawl 27 from rubbing against the tightening section 602, resulting in an increase in the resistance to rotation of turning the handle 4). By rotating the handle 4 counterclockwise, the second pawl 27 moves along the tightening section 602, driving the ratchet wheels 5 to rotate, the first pawl 28 slides along the outer edge of the ratchet wheels 5. When the handle 4 is rotated to the limit position of the tightening section 602, the handle 4 may be rotated clockwise, the second pawl 27 slides along the outer edge of the ratchet wheels 5, the first pawl 28 engages with the ratchet wheels 5, and the handle 4 is reset. By repeatedly rotating the handle 4 in counterclockwise and clockwise directions, the long webbing 3 may be manually wound up, which also serves to increase the tension of the long webbing 3 and achieve a tightening effect.

When the second pawl 27 is located in the releasing section 603, the second pawl 27 is disengaged from the ratchet wheels 5, and the handle 4 is continuously rotated counterclockwise until the second pawl 27 engages into the second locking port 605, at which time the second squeezing surface 402 squeezes the first pawl 28 so that the first pawl 28 disengage from the ratchet wheels 5, and the long webbing 3 is automatically wound up under the action of the coiling spring 91.

### Embodiment 4

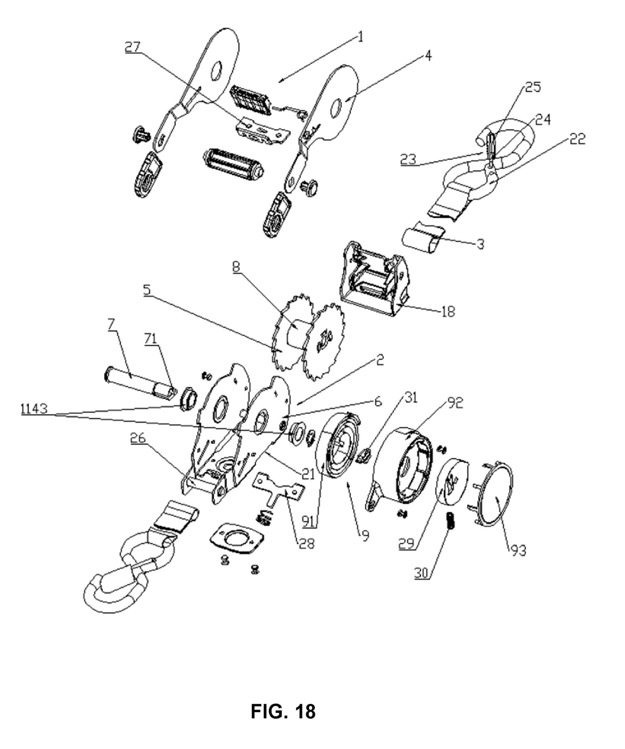

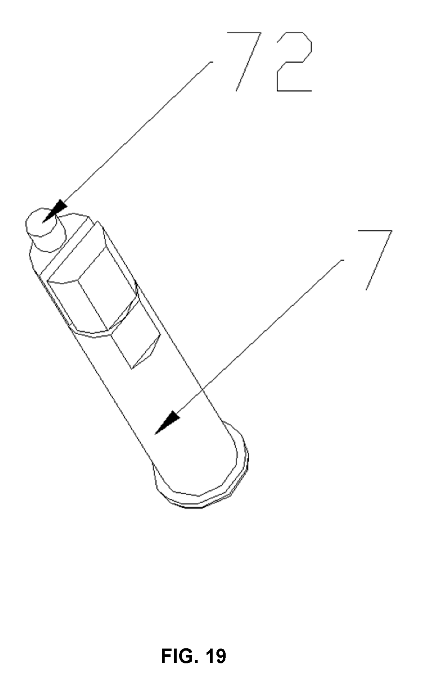

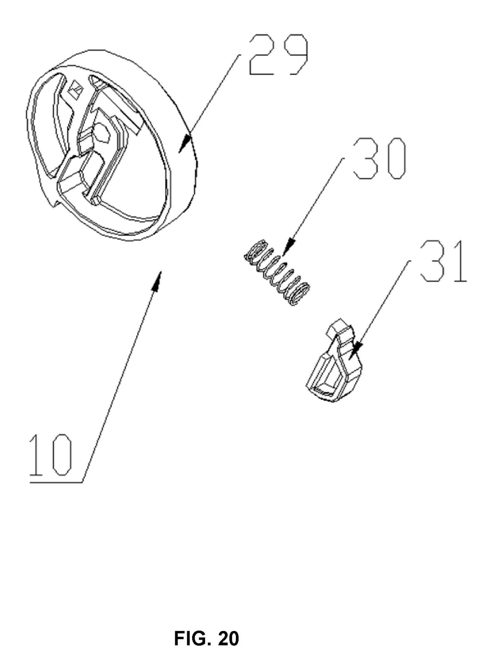

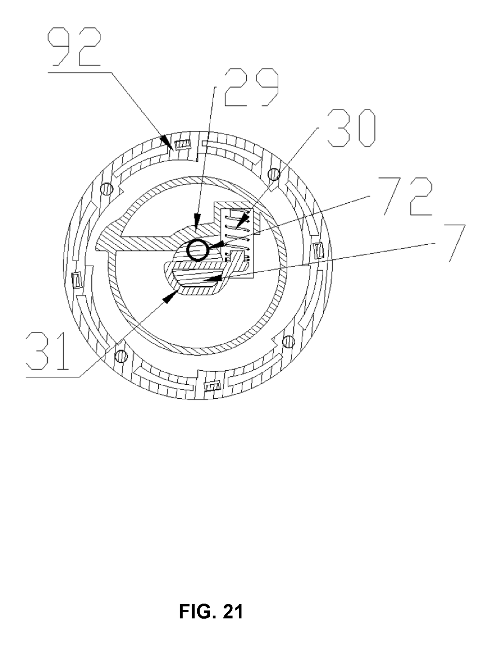

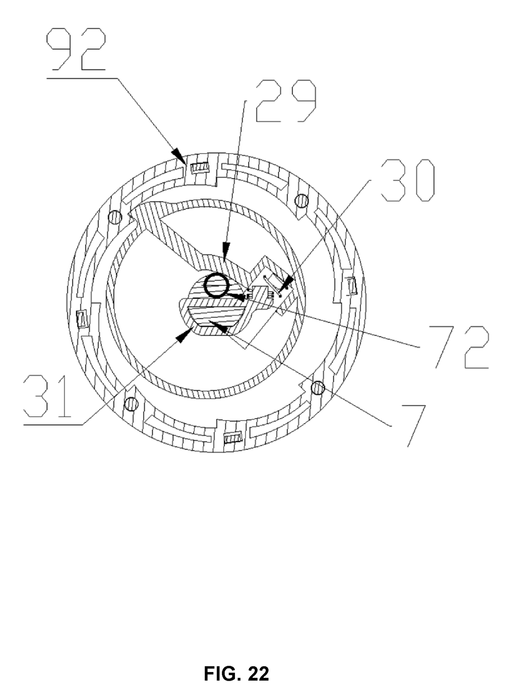

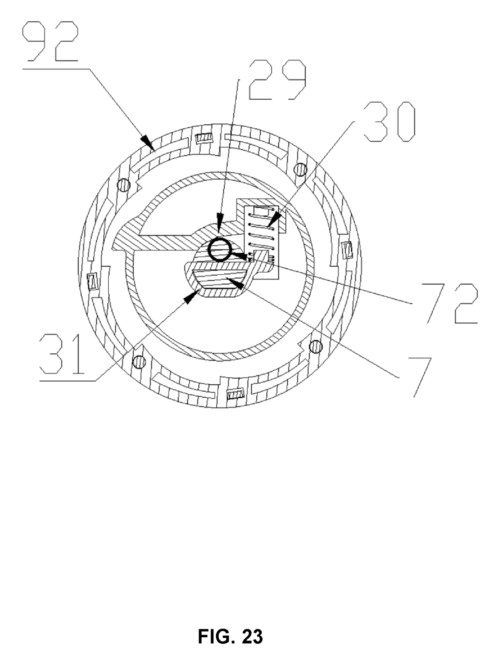

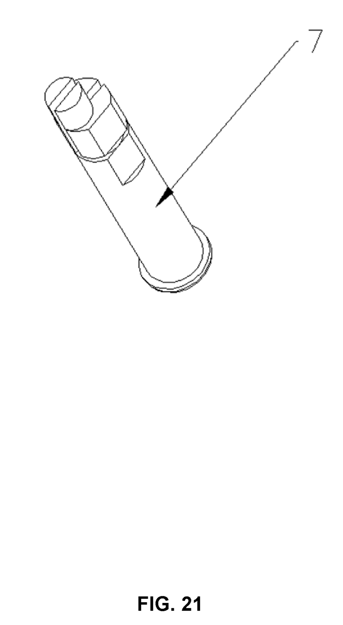

As shown in FIG. 18 - FIG. 23, the difference from the foregoing tensioning device is that, in this tensioning device, an eccentric shaft 72 is disposed at one end of the reeling shaft 7, and the brake assembly 10 includes a locking pawl 29, a spring 30, and a fixing member 31, the fixing member 31 is connected to the reeling shaft 7, the fixing member 31 rotates synchronously with the reeling shaft 7, an outer contour tooth is disposed on an outer periphery of the locking pawl 29 close to the coiling spring cartridge 92, the locking pawl 29 is connected to the eccentric shaft 72 at the end of the reeling shaft 7, the spring 30 is disposed between the locking pawl 29 and the fixing member 31, one end of the spring 30 is connected to the fixing member 31, and the other end of the spring is connected to the locking pawl 29 to provide a force for the locking pawl 29 to close toward the reeling shaft 7; and a plurality of internal teeth, which are consecutive and circumferentially arranged, are disposed on a ring-shaped inner wall of the coiling spring cartridge 92 facing the locking pawl 29.

In this embodiment, the spring 30 and the fixing member 31 may be replaced with a torsion spring structure, with one end of the torsion spring connected to the reeling shaft and the other end of the torsion spring connected to the locking pawl.

When the long webbing 3 is normally unwound, the reeling shaft 7 and the eccentric shaft 72 at the end of the reeling shaft drive the locking pawl 29 to rotate. When the unwinding speed is slow, the locking pawl 29 will not be thrown away due to the elastic force of the spring 30. When the unwinding speed is too fast, the centrifugal force generated exceeds the elastic force of the spring 30, causing the locking pawl 29 to be thrown away, according to the principle of the ratchet wheels, at this time, the outer contour tooth of the locking pawl comes into contact with the internal teeth of the coiling spring cartridge 92, but they do not engage, allowing the long webbing 3 to be continuously unwound. When the long webbing 3 is wound up, the reeling shaft 7 and the eccentric shaft 72 at the end of the reeling shaft drive the locking pawl 29 to rotate in the other direction, and when the winding speed is slow, the centrifugal force generated does not exceed the elastic force of the spring 30, the locking pawl 29 is not thrown away, and the outer contour tooth of the locking pawl 29 does not contact the internal teeth of the coiling spring cartridge 92, and the long webbing 3 may be continuously wound up. When the winding speed is too fast, the generated centrifugal force exceeds the elastic force of the spring 30, the locking pawl 29 is thrown away, the outer contour tooth of the locking pawl 29 engages with the internal teeth on the coiling spring cartridge 92, the brake assembly 10 is in a braking state, the reeling shaft 7 cannot rotate, and the winding of the long webbing 3 is locked. After locking, only a short section of the long webbing 3 needs to be pulled out, the locking pawl 29 is reset by the elastic force of the spring 30, and the outer contour tooth of the locking pawl 29 is disengaged from the internal teeth on the coiling spring cartridge 92, and the long webbing 3 may be wound up.

### Embodiment 5

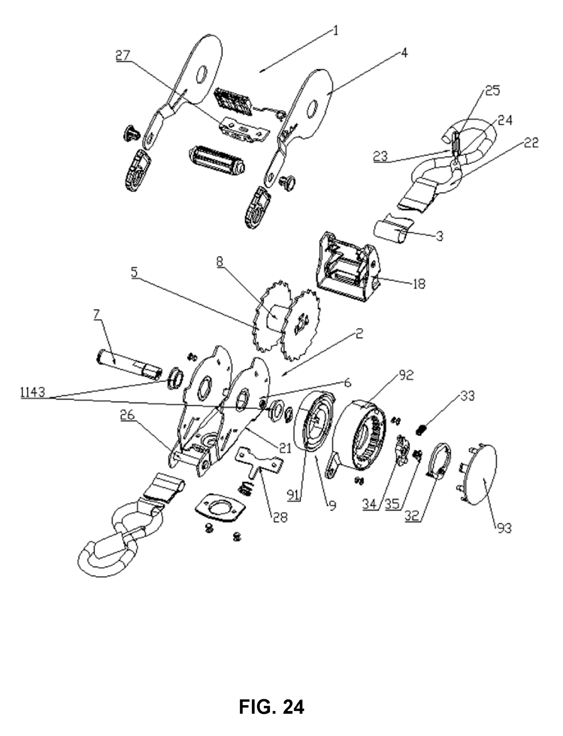

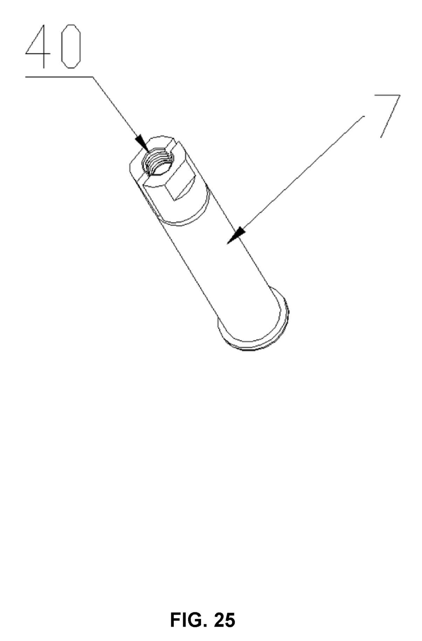

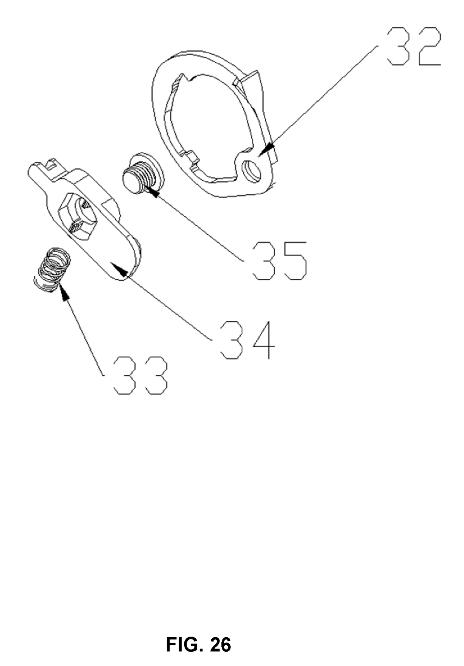

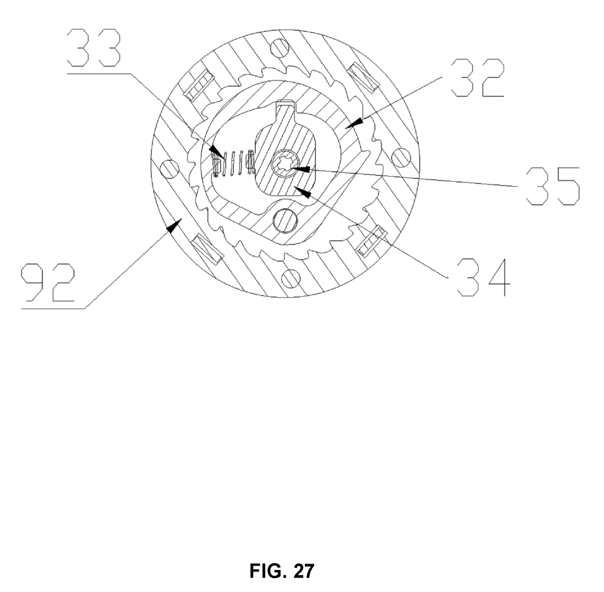

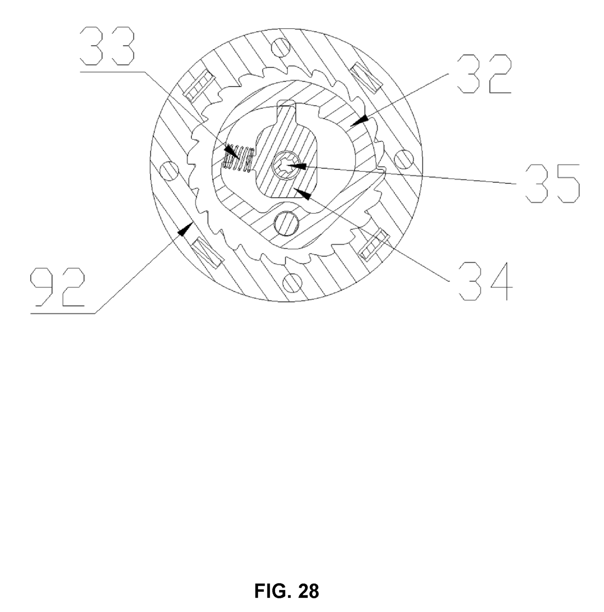

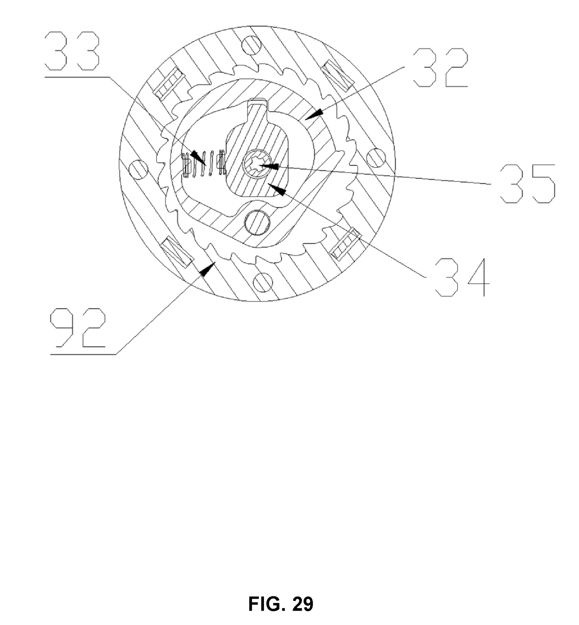

As shown in FIG. 24 - FIG. 29B, the difference from the foregoing tensioning device is that, in Embodiment 5, an end of the reeling shaft 7 is provided with a concentric screw hole 40, and the brake assembly 10 includes a brake pawl 32, a return spring 33, a limiting disk 34, and a screw 35, the limiting disk 34 is fixed at the end of the reeling shaft 7 by matching the screw 35 with the concentric screw hole 40, the limiting disk 34 rotates synchronously with the reeling shaft 7, an outer contour tooth is disposed on an outer periphery of the brake pawl 32 close to the coiling spring cartridge 92, the brake pawl 32 is connected to the limiting disk 34, the return spring 33 is disposed between the brake pawl 32 and the limiting disk 34, one end of the return spring 33 is connected to the limiting disk 34, and the other end of the return spring 33 is connected to the brake pawl 32 to provide a force for the brake pawl 32 to close toward the reeling shaft 7; and a plurality of internal teeth, which are consecutive and circumferentially arranged, are disposed on a ring-shaped inner wall of the coiling spring cartridge 92 facing the brake pawl 32.

When the long webbing 3 is normally unwound, the reeling shaft 7 and the limiting disk 34 fixed at the end of the reeling shaft 7 drive the brake pawl 32 to rotate, and when the unwinding speed is slow, the brake pawl 32 will not be thrown away due to the elastic force of the return spring 33, and when the unwinding speed is too fast, the centrifugal force generated exceeds the elastic force of the return spring 33, and the brake pawl 32 will be thrown away, but according to the principle of the ratchet wheels, at this time, the outer contour tooth of the brake pawl 32 come into contact with the internal teeth of the coiling spring cartridge 92, but they do not engage, allowing the long webbing 3 to be continuously unwound. When the long webbing 3 is wound up, the reeling shaft 7 and the limiting disk 34 fixed at the end of the reeling shaft 7 drive the brake pawl 32 to rotate in the other direction, so that when the winding speed is slow, the centrifugal force generated does not exceed the elastic force of the return spring 33, the brake pawl 32 will not be thrown away, the outer contour tooth of the brake pawl 32 does not come into contact with the internal teeth of the coiling spring cartridge 92, and the long webbing 3 may be continuously wound up When the rewinding speed is too fast, the centrifugal force generated exceeds the elastic force of the return spring 33, the brake pawl 32 is thrown away, the outer contour tooth of the brake pawl 32 engages with the internal teeth on the coiling spring cartridge 92, the brake assembly 10 is in a braking state, the reeling shaft 7 cannot be rotated, and the rewinding of the long webbing 3 is locked. After locking, only a short section of the long webbing 3 needs to be pulled out, the brake pawl 32 is reset under the action of the elastic force of the return spring 33, and the outer contour tooth of the brake pawl 32 is disengaged from the internal teeth on the coiling spring cartridge 92, and the long webbing 3 may be wound up.

### Embodiment 6

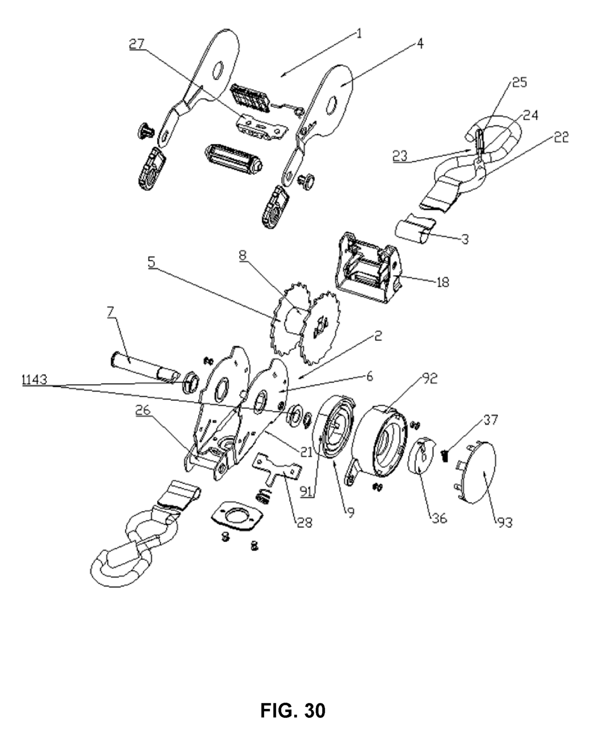

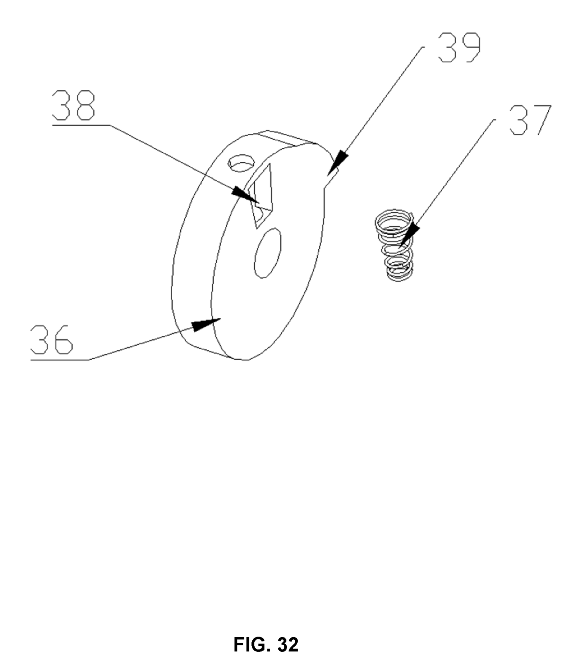

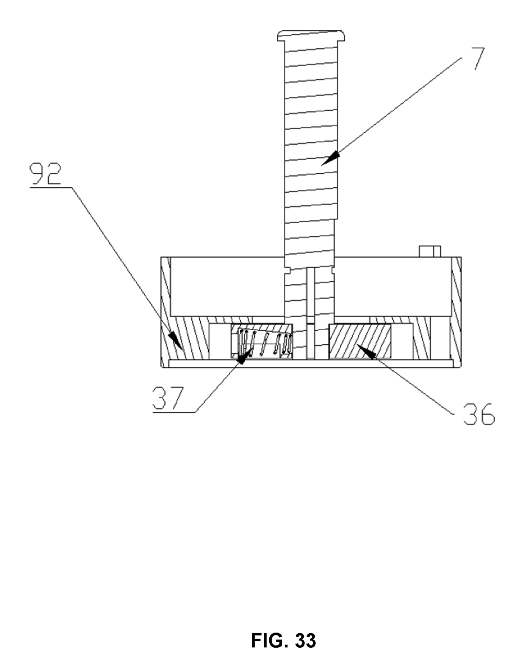

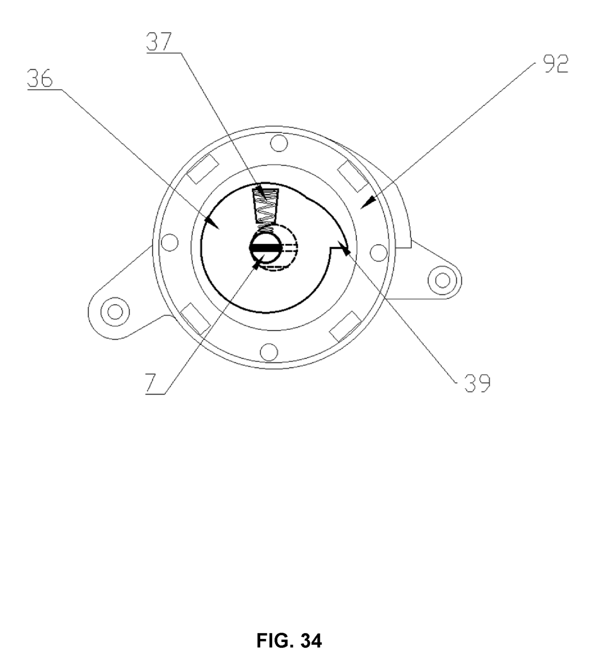

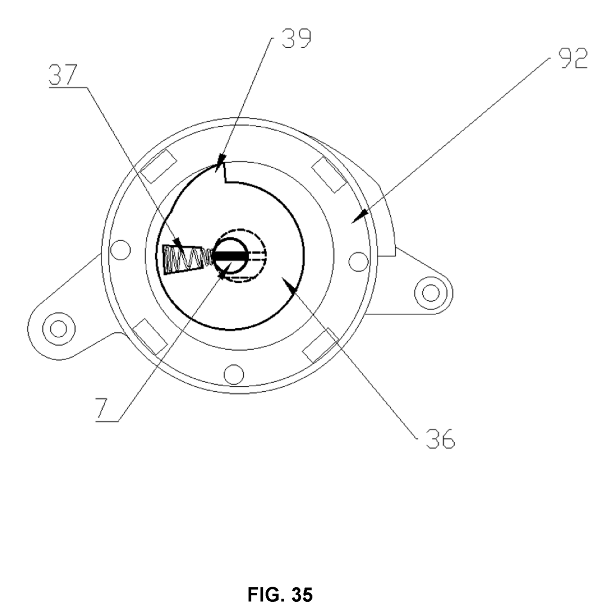

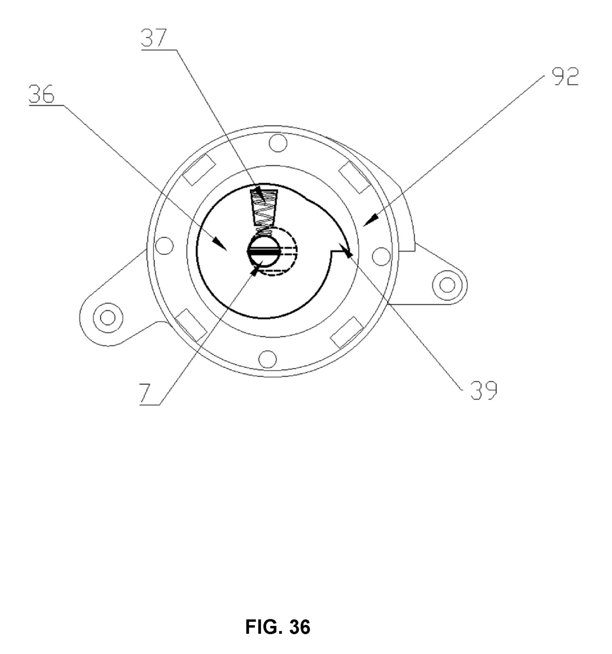

As shown in FIG. 30 - FIG. 36, an eccentric shaft is disposed on one end of the reeling shaft 7, and the brake assembly 10 includes a brake disk 36 and a compression spring 37, the brake disk 36 is provided with a recess 38, an outer contour flange 39 is disposed on an outer periphery of the brake disk 36 that is close to the coiling spring cartridge 92, the brake disk 36 is connected to the eccentric shaft of the reeling shaft 7, the compression spring 37 is mounted in the recess 38, one end of the compression spring 37 abuts against the brake disk 36, the other end of the compression spring 37 abuts against the eccentric shaft of the reeling shaft 7, and the brake disk 36 rotates synchronously with the reeling shaft 7.

When the long webbing 3 is normally unwound, the reeling shaft 7 and the eccentric shaft at the end of the reeling shaft 7 drive the brake disk 36 to rotate, and the long webbing 3 may be continuously unwound. When the long webbing 3 is wound up, the reeling shaft 7 and the eccentric shaft at the end of the reeling shaft 7 drive the brake disk 36 to rotate in the other direction, so that when the winding speed is slow, the centrifugal force generated does not exceed the elastic force of the compression spring 37, the brake disk 36 will not be thrown away, the outer contour flange 39 of the brake disk 36 does not contact the inner wall of the coiling spring cartridge 92, and the long webbing 3 may be wound up continuously. When the winding speed is too fast, the centrifugal force generated exceeds the elastic force of the compression spring 37, the brake disk 36 is thrown away, the outer contour flange 39 of the brake disk 36 engages with the inner wall on the coiling spring cartridge 92, and the brake assembly 10 is in a braking state, the reeling shaft 7 cannot be rotated, and the rewinding of the long webbing 3 is locked. After locking, only a short section of the long webbing 3 needs to be pulled out, the brake disk 36 is reset by the elastic force of the compression spring 37, and the outer contour flange 39 of the brake disk 36 is disengaged from the inner wall on the coiling spring cartridge 92, and the long webbing 3 may be wound up.

Regarding the specific models of the devices mentioned above, they are neither restricted nor described in detail. Similarly, the detailed interconnection methods of these devices are not elaborated herein. As matters of common general knowledge, those skilled in the art can comprehend them.

The embodiments of the present disclosure are merely provided to illustrate specific implementations and are not intended to limit the scope of protection. Those skilled in the art may make certain modifications inspired by these embodiments. Therefore, all equivalent variations or modifications made in accordance with the scope of the patent of the present disclosure shall fall within the scope of the patent claims of the present disclosure.

## Claims

1. A tensioning device with intelligent safety control for a webbing, comprising a handle assembly (1), a base assembly (2), and a long webbing (3), wherein the handle assembly (1) includes a handle (4) and ratchet wheels (5), the base assembly (2) includes a base (6), the handle (4) and the base (6) are pivotally connected with each other through a reeling shaft (7), the ratchet wheels (5) are fixedly mounted on the reeling shaft (7), a reel (8) is fixed between the ratchet wheels (5), the ratchet wheels (5), the reel (8), and the reeling shaft (7) rotate synchronously, the reel (8) is sleeved outside the reeling shaft (7) and disposed coaxially, one side of the reel (8) is provided with an opening for the long webbing (3) to pass through, one end of the long webbing (3) is sleeved on the reeling shaft (7), and the other end of the long webbing (3) is led out from one end of the base (6) through the opening on the reel, one end of the reeling shaft (7) is connected to a coiling spring assembly (9), the coiling spring assembly (9) includes a coiling spring (91) and a coiling spring cartridge (92) sleeved on the coiling spring (91), the base (6) includes a base side plate (61) and a base bottom plate (62), and an upper side curved surface (66) of the base side plate (61) is divided into a release zone (606) and a tensioning working zone (607) in turn; the coiling spring assembly (9) further includes a coiling cartridge cover (93), the coiling cartridge cover (93) is disposed on the coiling spring cartridge (92), and a brake assembly (10) is disposed in the coiling spring cartridge (92).

2. The tensioning device according to claim 1, wherein the upper side curved surface (66) of the base side plate (61) is provided with a first protrusion (609), the first protrusion (609) dividing the upper side curved surface (66) of the base side plate (61) into the release zone (606) and the tensioning working zone (607); the base side plate (61) and the base bottom plate (62) are of one-piece construction, the base side plate (61) being perpendicular to the base bottom plate (62) and symmetrically disposed on both sides of the base bottom plate (62); a first pawl sliding groove (63) is disposed at a rear side of the base side plate (61), a first limiting plate (64) is disposed at a rear side of the base bottom plate (62), the first pawl sliding groove (63) is provided with a first pawl (28), the first pawl (28) is T-shaped, both ends of the first pawl (28) are slidably disposed at the first pawl sliding groove (63), a first reset spring (65) is sleeved on a lower end of the first pawl (28), which is inserted into the first limiting plate (64) and slidably matched with the first limiting plate (64); and the first pawl (28) elastically slides in a direction of the first pawl sliding groove (63) under an action of the first reset spring (65), and the first pawl (28) is correspondingly cooperated with the ratchet wheels (5);
the handle (4) includes a handgrip and handle side plates (42), the handle side plates (42) are connected to the handgrip (41) and symmetrically disposed on both sides of the handgrip (41), the handle side plates (42) are coaxially rotationally connected to the base side plate (61) through a sleeve (1143), the sleeve (1143) is connected with the reeling shaft (7) so that the handle side plates (42) are freely rotatable with the reeling shaft (7) as a central axis, the handle side plates (42) are provided with symmetrical second pawl slide grooves (43), the second pawl slide grooves (43) are provided with a second pawl (27), the second pawl (27) is L-shaped, a plastic sleeve (44) is disposed at an upper end of the second pawl (27), and two ends of the second pawl (27) are slidably disposed at the second pawl slide grooves (43), the second pawl is connected to one side of one of the handle side plates (42) by a torsion spring (45); and the second pawl (27) elastically slides in a direction of each of the second pawl slide grooves (43) under an action of the torsion spring (45), and the second pawl (27) is correspondingly cooperated with the ratchet wheels (5);
the two ends of the second pawl (27) extend out of the second pawl slide grooves (43) and fit in the upper side curved surface (66) of the base side plate (61) under the action of the torsion spring (45); and
a first squeezing surface (401) and a second squeezing surface (402) for squeezing the first pawl (28) are disposed on a lower side curved surface (46) of each of the handle side plates (42).

3. The tensioning device according to claim 2, wherein the upper side curved surface (66) of the base side plate (61) is further divided into an unloading section (601), a tightening section (602), and a releasing section (603) in turn, a first locking port (604) being disposed between the unloading section (601) and the tightening section (602), and a second locking port (605) being disposed at an end of the releasing section (603).

4. The tensioning device according to claim 3, wherein one end of the reeling shaft (7) is provided with a C-shaped opening (71), and the brake assembly (10) includes a limit tooth (11) and a pendulum tooth (12), the limit tooth (11) is connected to the coiling spring cartridge (92), a plurality of internal teeth (13) are disposed on a ring-shaped inner wall of the limit tooth (11) that is close to the reeling shaft (7), a hole is in a center of the pendulum tooth (12), a linkage groove (14) and a brake groove (15) are disposed in the hole, a diagonal over-section (16) is disposed between the linkage groove (14) and the brake groove (15), the pendulum tooth (12) is eccentrically sleeved on the C-shaped opening (71) at the end of the reeling shaft (7), an outer contour tooth (17) is disposed on an outer side of the pendulum tooth (12) away from the brake groove (15), and the pendulum tooth (12) rotates synchronously with the reeling shaft (7).

5. The tensioning device according to claim 3, wherein an eccentric shaft (72) is disposed at one end of the reeling shaft (7), and the brake assembly (10) includes a locking pawl (29), a spring (30), and a fixing member (31), the fixing member (31) is connected to the reeling shaft (7), the fixing member (31) rotates synchronously with the reeling shaft (7), an outer contour tooth is disposed on an outer periphery of the locking pawl (29) close to the coiling spring cartridge (92), the locking pawl (29) is connected to the eccentric shaft (72) at the end of the reeling shaft (7), the spring (30) is disposed between the locking pawl (29) and the fixing member (31), one end of the spring (30) is connected to the fixing member (31), and the other end of the spring (30) is connected to the locking pawl (29) to provide a force for the locking pawl (29) to close toward the reeling shaft (7); and
a plurality of internal teeth, which are consecutive and circumferentially arranged, are disposed on a ring-shaped inner wall of the coiling spring cartridge (92) facing the locking pawl (29).

6. The tensioning device according to claim 3, wherein an end of the reeling shaft (7) is provided with a concentric screw hole (40), and the brake assembly (10) includes a brake pawl (32), a return spring (33), a limiting disk (34), and a screw (35), the limiting disk (34) is fixed at the end of the reeling shaft (7) by matching the screw (35) with the concentric screw hole (40), the limiting disk (34) rotates synchronously with the reeling shaft (7), an outer contour tooth is disposed on an outer periphery of the brake pawl (32) close to the coiling spring cartridge (92), the brake pawl (32) is connected to the limiting disk (34), the return spring (33) is disposed between the brake pawl (32) and the limiting disk (34), one end of the return spring (33) is connected to the limiting disk (34), and the other end of the return spring (33) is connected to the brake pawl (32) to provide a force for the brake pawl (32) to close toward the reeling shaft (7); and
a plurality of internal teeth, which are consecutive and circumferentially arranged, are disposed on a ring-shaped inner wall of the coiling spring cartridge (92) facing the brake pawl (32).

7. The tensioning device according to claim 3, wherein an eccentric shaft is disposed on one end of the reeling shaft (7), and the brake assembly (10) includes a brake disk (36) and a compression spring (37), the brake disk (36) is provided with a recess (38), an outer contour flange (39) is disposed on an outer periphery of the brake disk (36) that is close to the coiling spring cartridge (92), the brake disk (36) is connected to the eccentric shaft of the reeling shaft (7), the compression spring (37) is mounted in the recess (38), one end of the compression spring (37) abuts against the brake disk (36), the other end of the compression spring (37) abuts against the eccentric shaft of the reeling shaft (7), and the brake disk (36) rotates synchronously with the reeling shaft (7).

8. The tensioning device according to any one of claims 4-7, wherein a front cover (18) is disposed on one end of the base close to the long webbing (3), the front cover (18) is provided with a webbing channel (19) for the long webbing (3) to pass through and provided with symmetrical limit walls (20), and a bottom of the base is provided with symmetrical limit ports (21) that are strip-shaped, the limit walls (20) and the limit ports (21) cooperating for limiting the handle (4) and avoiding interference between sides of the handle (4) and the ratchet wheels (5).

9. The tensioning device according to claim 8, wherein the long webbing (3) is connected with a hook (22), the front cover (18) is disposed at one end of the base (6), the webbing channel (19) on the front cover (18) extends toward the other end of the base (6), and the webbing channel (19) is in a constricted shape and is configured to catch one end of the hook (22).

10. The tensioning device according to claim 9, wherein a safety mechanism (23) is disposed at an opening of the hook (22), the safety mechanism (23) includes a return-action spring (24) and a safety sleeve (25), the return-action spring (24) is mounted on the hook (22), the safety sleeve (25) is disposed on the return-action spring (24) and elastically closes the opening of the hook (22) under an action of the return-action spring (24).

11. The tensioning device according to claim 10, wherein a detachable connecting shaft (26) is disposed on an end of the base (6) opposite to the long webbing (3), and the detachable connecting shaft (26) is connected with at least one of a short webbing, a hooklet, a snap, or a fixed plate.
